# EUROPÄISCHE PATENTANMELDUNG

(11) **EP 1 753 218 A1**
(43) Veröffentlichungstag der Anmeldung: **14.02.2007**
(21) Anmeldenummer: 06117669.9
(22) Anmeldetag: 21.07.2006
(51) Int. Cl.: H04M 15/00, H04L 12/14

(54) **Verfahren und Anordnung zum Betreiben eines Gruppendienstes in einem Kommunikationsnetz**

(30) Priorität: 12.08.2005 DE 102005038853
(71) Anmelder: SIEMENS AKTIENGESELLSCHAFT, 80333 München (DE)
(72) Erfinder: Andersen, Frank-Uwe, 10625, Berlin (DE); Herzog, Christian, 13187, Berlin (DE); Lüde, Thomas, 12169, Berlin (DE)

(57) **Zusammenfassung**

Die Erfindung betrifft ein Verfahren zum Betreiben eines Gruppendienstes in einem Kommunikationsnetz mit Erfassung gruppenspezifischer Ereignisdaten in einer Ereignis-Erfassungseinheit (1) mit den folgenden Schritten:
- Übermitteln zumindest der vergebührungsrelevanten gruppenspezifischen Ereignisdaten von der Ereignis-Erfassungseinheit (1) an eine Gruppen-Gebühren-Verarbeitungseinheit (2) und
- Auswerten der vergebührungsrelevanten gruppenspezifischen Ereignisdaten und Erzeugen von nutzungsabhängigen und teilnehmerspezifischen Vergebührungsdaten durch die Gruppen-Gebühren-Verarbeitungseinheit (2).

Darüber hinaus betrifft die Erfindung auch eine Anordnung zum Betreiben eines Gruppendienstes in einem Kommunikationsnetz.

## Beschreibung

Die Erfindung betrifft ein Verfahren zum Betreiben eines Gruppendienstes in einem Kommunikationsnetz.

In Kommunikationsnetzen, wie beispielsweise Mobilfunknetzen der dritten Generation, sind verschiedene als Gruppendienste bezeichnete Dienste bekannt. Hierbei handelt es sich um Dienste, die von Teilnehmern bzw. Mitgliedern einer Gruppe genutzt werden. Beispiele für in Mobilfunknetzen bekannte Gruppendienste sind Instant Messaging (IM), Push-to-Talk-over-Cellular (PoC), Spielanwendungen oder auch der so genannte Presence-Dienst. Die Übertragung der Daten des Gruppendienstes von und/oder zu den Teilnehmern der Gruppe kann dabei in Abhängigkeit von dem jeweiligen Gruppendienst entweder paketvermittelt oder aber auch leitungsvermittelt erfolgen.

Im Rahmen der so genannten "Open Mobile Alliance (OMA)" werden derzeit für den Mobilfunkbereich verschiedene Dienste und Anwendungen standardisiert. Neben einzelnen Gruppendiensten, wie etwa Push-to-Talk-over-Cellular, erarbeitet die OMA auch für die allgemeine Architektur von Gruppendiensten relevante Spezifikationen. So ist aus Kapitel 5.1.3 des Dokuments "XML Document Management Requirements, Candidate Version 1.0 - 17 Mar 2005, Open Mobile Alliance, OMA-RD-XDM-V1_0-20050317-C" die Möglichkeit der Definition von Gruppen bekannt, welche für mehrere Gruppendienste verwendet werden können. So kann etwa ein und dieselbe Gruppe im Rahmen der Gruppendienste Instant Messaging und Push-to-Talk-over-Cellular verwendet werden.

Der vorliegenden Erfindung liegt die Aufgabe zugrunde, ein flexibleres und verbessertes Verfahren zum Betreiben eines Gruppendienstes in einem Kommunikationsnetz anzugeben.

Diese Aufgabe wird erfindungsgemäß gelöst durch ein Verfahren zum Betreiben eines Gruppendienstes in einem Kommunikationsnetz mit den folgenden Schritten: Erfassen gruppenspezifischer Ereignisdaten in einer Ereignis-Erfassungseinheit, Übermitteln zumindest der vergebührungsrelevanten gruppenspezifischen Ereignisdaten von der Ereignis-Erfassungseinheit an eine Gruppen-Gebühren-Verarbeitungseinheit und Auswerten der vergebührungsrelevanten gruppenspezifischen Ereignisdaten und Erzeugen von nutzungsabhängigen und teilnehmerspezifischen Vergebührungsdaten durch die Gruppen-Gebühren-Verarbeitungseinheit.

Die Aufgabe der Gruppen-Gebühren-Verarbeitungseinheit besteht darin, den vergebührungsrelevanten Anteil der gruppenspezifischen Ereignisdaten auszuwerten und basierend auf diesen Daten nutzungsabhängige und teilnehmerspezifische Vergebührungsdaten zu erzeugen. Hierdurch wird es vorteilhafterweise ermöglicht, auch für Gruppendienste eine teilnehmerspezifische Vergebührung nach differenzierten Kriterien vorzunehmen. Das erfindungsgemäße Verfahren ist vorteilhaft, da im Gegensatz zu bekannten Verfahren zum Betreiben eines Gruppendienstes in einem Kommunikationsnetz, bei welchen die Bezahlung von Diensten, die von Teilnehmern einer Gruppe genutzt werden, nur auf der Messung der Nutzung des verwendeten Transportmechanismus (beispielsweise General Packet Radio Service, GPRS) und der versendeten Datenmenge basiert, hier eine nutzungsabhängige Vergebührung individuell für jeden Teilnehmer der Gruppe ermöglicht wird. Damit entfällt die Notwendigkeit pauschale Vergebührungsmodelle anzuwenden, die von den Teilnehmern eines Gruppendienstes als ungerecht oder nachteilig empfunden werden können. Beispielsweise sieht ein solches pauschales Vergebührungsmodell so aus, dass derjenige, der eine Gruppe einrichtet, für alle in der Folge anfallenden Gebühren aufkommt, oder aber jeder Teilnehmer des Gruppendienstes eine monatliche Gebühr für die Möglichkeit der Nutzung des Gruppendienstes bezahlen muss. Letzteres ist insbesondere für Teilnehmer nachteilig, die einen Gruppendienst nur gelegentlich nutzen, da solche Teilnehmer nur einen geringen Gegenwert für ihre zusätzlichen monatlichen Gebühren erhalten.

Generell ist zu beachten, dass es sich bei der Ereignis-Erfassungseinheit und der Gruppen-Gebühren-Verarbeitungseinheit, ebenso wie bei den weiteren im Rahmen des erfindungsgemäßen Verfahrens verwendeten Einheiten, primär um logische Einheiten handelt. Dies bedeutet, dass eine Einheit durch ihre Funktion gekennzeichnet ist und nicht durch ihre konkrete hardware-technische Realisierung. Somit können beispielsweise die Ereignis-Erfassungseinheit und der Gruppen-Gebühren-Verarbeitungseinheit als separate, möglicherweise auch räumlich von einander entfernte Vorrichtungen ausgeführt sein, oder aber ganz oder teilweise in derselben technischen Vorrichtung realisiert werden.

Das erfindungsgemäße Verfahren kann vorzugsweise so ausgebildet sein, dass die gruppenspezifischen Ereignisdaten protokolliert werden und zumindest die vergebührungsrelevanten gruppenspezifischen Ereignisdaten von der Ereignis-Erfassungseinheit an die Gruppen-Gebühren-Verarbeitungseinheit übermittelt werden. Diese Ausführungsform ist bevorzugt, da hierdurch eine Auswertung der vergebührungsrelevanten gruppenspezifischen Ereignisdaten in längeren zeitlichen Abständen, wie beispielsweise täglich oder nur einmal im Monat, ermöglicht wird. Somit kann eine Auswertung der vergebührungsrelevanten gruppenspezifischen Ereignisdaten und eine Erzeugung der nutzungsabhängigen und teilnehmerspezifischen Vergebührungsdaten auf eine ressourcensparende Art und Weise durch die Gruppen-Gebühren-Verarbeitungseinheit erfolgen. Vorzugsweise wird diese Ausführungsform des erfindungsgemäßen Verfahrens somit für die Vergebührung so genannter Post-Paid-Teilnehmer angewendet, für welche in regelmäßigen zeitlichen Abständen eine Rechnung erstellt wird.

Das erfindungsgemäße Verfahren kann in einer weiteren bevorzugten Ausführungsform auch so ablaufen, dass zumindest die vergebührungsrelevanten gruppenspezifischen Ereignisdaten jeweils unmittelbar nach ihrer Erfassung von der Ereignis-Erfassungseinheit an die Gruppen-Gebühren-Verarbeitungseinheit übermittelt werden. Die Übermittlung der vergebührungsrelevanten gruppenspezifischen Ereignisdaten unmittelbar nach ihrer Erfassung ist vorteilhaft, da die vergebührungsrelevanten gruppenspezifischen Ereignisdaten somit in Echtzeit zur Auswertung durch die Gruppen-Gebühren-Verarbeitungseinheit zur Verfügung stehen. Hierdurch ist auch für so genannte Pre-Paid-Kunden, für welche, aufgrund der Verwendung vorausbezahlter Konten, eine Berechnung der Gebühren in Echtzeit erforderlich ist, eine nutzungsabhängige und teilnehmerspezifische Vergebührung der Teilnehmer des Gruppendienstes möglich.

Das erfindungsgemäße Verfahren kann vorzugsweise auch so ausgeprägt sein, dass die gruppenspezifischen Ereignisdaten gruppendienstspezifisch sind. Dabei ist der Ausdruck "gruppendienstspezifisch" derart zu verstehen, dass gruppendienstspezifische Ereignisdaten nicht nur für die jeweilige Gruppe, sondern auch für den jeweiligen Gruppendienst spezifisch sind. Die gruppenspezifischen Ereignisdaten können beispielsweise dadurch gruppendienstspezifisch werden, dass sie für verschiedene Gruppendienste separat erfasst werden, oder in den gruppenspezifischen Ereignisdaten jeweils der genutzte Gruppendienst identifiziert wird. Dadurch, dass die Ereignisdaten nicht nur spezifisch für die jeweilige Gruppe, sondern darüber hinaus auch für den jeweils von der Gruppe in Anspruch genommenen Gruppendienst sind, wird eine nutzungsabhängige und teilnehmerspezifische Vergebührung in Abhängigkeit von dem jeweiligen Gruppendienst ermöglicht. Diese flexible Vergebührung ist vorteilhaft, da somit für verschiedene Gruppendienste unterschiedliche Vergebührungsmodelle angeboten werden können.

Das erfindungsgemäße Verfahren kann vorzugsweise auch so ausgestaltet sein, dass die Vergebührungsdaten zur teilnehmerspezifischen Nachverarbeitung von der Gruppen-Gebühren-Verarbeitungseinheit an zumindest eine Vergebührungseinheit übermittelt werden. Bei der Vergebührungseinheit handelt es sich vorzugsweise um das standardmäßig von dem jeweiligen Dienstanbieter oder Netzbetreiber zur Tarifierung und Vergebührung verwendete Datenverarbeitungssystem. Vorzugsweise werden die nutzungsabhängigen und teilnehmerspezifischen Vergebührungsdaten eines Teilnehmers eines Gruppendienstes somit jeweils gemeinsam mit solchen Vergebührungsdaten des Teilnehmers, welche nicht aus der Nutzung von Gruppendiensten stammen, weiter- bzw. nachverarbeitet.

In einer weiteren bevorzugten Ausführungsform kann das erfindungsgemäße Verfahren auch so ablaufen, dass als Ereignis-Erfassungseinheit ein Gruppenverwaltungs-Server verwendet wird, auf dem die für die Einrichtung und Verwaltung der Gruppe des Gruppendienstes relevanten Daten gespeichert sind. Diese Ausführungsform des erfindungsgemäßen Verfahrens ist vorteilhaft, da mit dem Gruppenverwaltungs-Server bereits eine Komponente zur Verfügung steht, welche gruppenspezifische Informationen speichert. Eine zusätzliche Nutzung des Gruppenverwaltungs-Servers als Ereignis-Erfassungseinheit ist bevorzugt, da hierdurch die Einführung einer zusätzlichen Komponente vermieden wird. Alle für die Teilnehmer der Gruppe spezifischen Informationen können somit an einer zentralen Stelle verwaltet werden.

Alternativ kann in einer weiteren bevorzugten Ausführungsform des erfindungsgemäßen Verfahrens als Ereignis-Erfassungseinheit ein Gruppendienst-Server verwendet werden, der den Gruppendienst mittels des Kommunikationsnetzes für die Gruppe zur Verfügung stellt. Diese Ausführungsform ist bevorzugt, da der Gruppendienst-Server unmittelbar alle mit der Nutzung des Gruppendienstes verbundenen Ereignisdaten registriert. Somit entfällt das Übermitteln der gruppenspezifischen Ereignisdaten an eine separate Ereignis-Erfassungseinheit. Sofern ein Gruppendienst-Server mehrere Arten von Gruppendiensten zur Verfügung stellt, können die gruppenspezifischen Ereignisdaten mehrerer Gruppendienste in derselben Ereignis-Erfassungseinheit erfasst werden. Werden unterschiedliche Gruppendienste mittels verschiedener Gruppendienst-Server angeboten, so kann jedoch die Realisierung der Ereignis-Erfassungseinheit als eigene separate, vorzugsweise zentrale Komponente oder als Bestandteil des Gruppenverwaltungs-Servers bevorzugt sein.

Bei dem Kommunikationsnetz kann es sich beispielsweise um ein Telekommunikationsfestnetz oder das Internet handeln. Besonders bevorzugt ist jedoch die Ausführungsform des erfindungsgemäßen Verfahrens, dass als Kommunikationsnetz ein Mobilfunknetz verwendet wird.

In einer weiteren bevorzugten Ausführungsform des erfindungsgemäßen Verfahrens wird der Gruppendienst über die Grenze des Kommunikationsnetzes hinweg betrieben. Dies bedeutet, dass die Teilnehmer der Gruppe auch Kunden unterschiedlicher Netzbetreiber bzw. Dienstanbieter sein können, d. h. ein Gruppendienst kann beispielsweise in mehreren Mobilfunknetzen betrieben werden. Weiterhin kann das Betreiben des Gruppendienstes auch ganz generell über Netzwerkgrenzen hinweg erfolgen. Dies bedeutet, dass die Teilnehmer einer Gruppe unterschiedliche Transportmechanismen und Zugangstechnologien bei der Nutzung eines Gruppendienstes verwenden können. Ein Beispiel hierfür ist eine Gruppe, die Teilnehmer aus einem Mobilfunknetz, einem Festnetz und dem Internet umfasst.

Die Erfindung betrifft des Weiteren eine Anordnung zum Betreiben eines Gruppendienstes in einem Kommunikationsnetz.

Diesbezüglich liegt der Erfindung die Aufgabe zugrunde, eine flexiblere und verbesserte Anordnung zum Betreiben eines Gruppendienstes in einem Kommunikationsnetz anzugeben.

Diese Aufgabe wird erfindungsgemäß gelöst durch eine Anordnung zum Betreiben eines Gruppendienstes in einem Kommunikationsnetz mit Erfassung gruppenspezifischer bzw. gruppendienstspezifischer Ereignisdaten in einer Ereignis-Erfassungseinheit und mit einer mit der Ereignis-Erfassungseinheit verbundenen Gruppen-Gebühren-Verarbeitungseinheit mit Empfangsmitteln zum Empfangen zumindest der vergebührungsrelevanten gruppenspezifischen bzw. gruppendienstspezifischen Ereignisdaten von der Ereignis-Erfassungseinheit, Analysemitteln zum Auswerten der vergebührungsrelevanten gruppenspezifischen bzw. gruppendienstspezifischen Ereignisdaten und Vergebührungsdatenmitteln zum Erzeugen von nutzungsabhängigen und teilnehmerspezifischen Vergebührungsdaten.

Entsprechend den im Zusammenhang mit dem erfindungsgemäßen Verfahren gemachten Ausführungen ist die erfindungsgemäße Anordnung vorteilhaft, da sie eine nutzungsabhängige Vergebührung der Teilnehmer des Gruppendienstes ermöglicht.

In einer bevorzugten Ausführungsform der erfindungsgemäßen Anordnung ist die Ereignis-Erfassungseinheit zum Protokollieren der gruppenspezifischen bzw. gruppendienstspezifischen Ereignisdaten und zur Übermittlung zumindest der vergebührungsrelevanten gruppenspezifischen bzw. gruppendienstspezifischen Ereignisdaten an die Gruppen-Gebühren-Verarbeitungseinheit ausgebildet. Durch das Protokollieren der gruppenspezifischen Ereignisdaten durch die Ereignis-Erfassungseinheit kann vorzugsweise die Übermittlung der gruppenspezifischen bzw. gruppendienstspezifischen Ereignisdaten unabhängig und im zeitlichen Abstand von der Erfassung der Ereignisdaten erfolgen. Das von der Ereignis-Erfassungseinheit an die Gruppen-Gebühren-Verarbeitungseinheit übertragene Protokoll beinhaltet dabei vorzugsweise Ereignisdaten, welche einen längeren Zeitraum betreffen.

Vorzugsweise kann die erfindungsgemäße Anordnung auch so ausgeprägt sein, dass die Ereignis-Erfassungseinheit zur Übermittlung zumindest der vergebührungsrelevanten gruppenspezifischen bzw. gruppendienstspezifischen Ereignisdaten jeweils unmittelbar nach ihrer Erfassung an die Gruppen-Gebühren-Verarbeitungseinheit ausgebildet ist. Die Übermittlung der vergebührungsrelevanten gruppenspezifischen Ereignisdaten bzw. der vergebührungsrelevanten gruppendienstspezifischen Ereignisdaten in Echtzeit an die Gruppen-Gebühren-Verarbeitungseinheit ist bevorzugt, da hierdurch eine Echtzeitvergebührung beispielsweise von so genannten Pre-Paid-Teilnehmern erfolgen kann, für welche die Vergebührung unter Verwendung vorausbezahlter Konten vorgenommen wird. Es sei darauf hingewiesen, dass auch bei der Verwendung eines solchen Pre-Paid-Systems parallel ein Protokollieren der gruppenspezifischen beziehungsweise der gruppendienstspezifischen Ereignisdaten erfolgen kann. Diese Protokollierung dient jedoch in diesem Fall zumindest bezüglich der Pre-Paid-Teilnehmer nicht der Erzeugung von nutzungsabhängigen und teilnehmerspezifischen Vergebührungsdaten, sondern kann für weitere Anwendungen verwendet werden.

Vorzugsweise ist die erfindungsgemäße Anordnung so ausgestaltet, dass mit der Gruppen-Gebühren-Verarbeitungseinheit eine Vergebührungseinheit verbunden ist zum Empfangen der Vergebührungsdaten und zu deren teilnehmerspezifischen Nachverarbeitung. Diese Ausführungsform ist vorteilhaft, da somit die mittels der Vergebührungsdatenmittel der Gruppen-Gebühren-Verarbeitungseinheit erzeugten nutzungsabhängigen und teilnehmerspezifischen Vergebührungsdaten analog zu solchen Daten, die nicht aus der Nutzung von Gruppendiensten stammen, weiterverarbeitet werden können. Hierdurch besteht die Möglichkeit, für einen Teilnehmer eine Rechnung zu erstellen, welche sowohl die im Rahmen der Nutzung von Gruppendiensten als auch die im Rahmen der Nutzung anderer Dienste angefallenen Gebühren beinhaltet.

Vorzugsweise ist die erfindungsgemäße Anordnung so ausgebildet, dass die Ereignis-Erfassungseinheit ein Gruppenverwaltungs-Server ist, auf dem die für die Einrichtung und Verwaltung der Gruppe des Gruppendienstes relevanten Daten gespeichert sind. Wie bereits im Zusammenhang mit dem erfindungsgemäßen Verfahren beschrieben, bietet die Verwendung des Gruppenverwaltungs-Servers als Ereignis-Erfassungseinheit den Vorteil, dass alle die Verwaltung und Vergebührung einer Gruppe betreffenden Daten an einer zentralen Stelle gespeichert beziehungsweise erfasst werden.

In einer weiteren bevorzugten Ausführungsform der erfindungsgemäßen Anordnung ist die Ereignis-Erfassungseinheit ein Gruppendienst-Server, der den Gruppendienst mittels des Kommunikationsnetzes für die Gruppe zur Verfügung stellt. Dies bietet den Vorteil, dass die Ereignisdaten des Gruppendienstes unmittelbar an ihrem Entstehungsort von der Ereignis-Erfassungseinheit erfasst werden.

Die erfindungsgemäße Anordnung kann vorzugsweise so ausgestaltet sein, dass das Kommunikationsnetz ein Mobilfunknetz ist.

Zur weiteren Erläuterung des erfindungsgemäßen Verfahrens und der erfindungsgemäßen Anordnung zeigt die
- Figur: in einer schematischen Darstellung ein Ausführungsbeispiel der erfindungsgemäßen Anordnung.

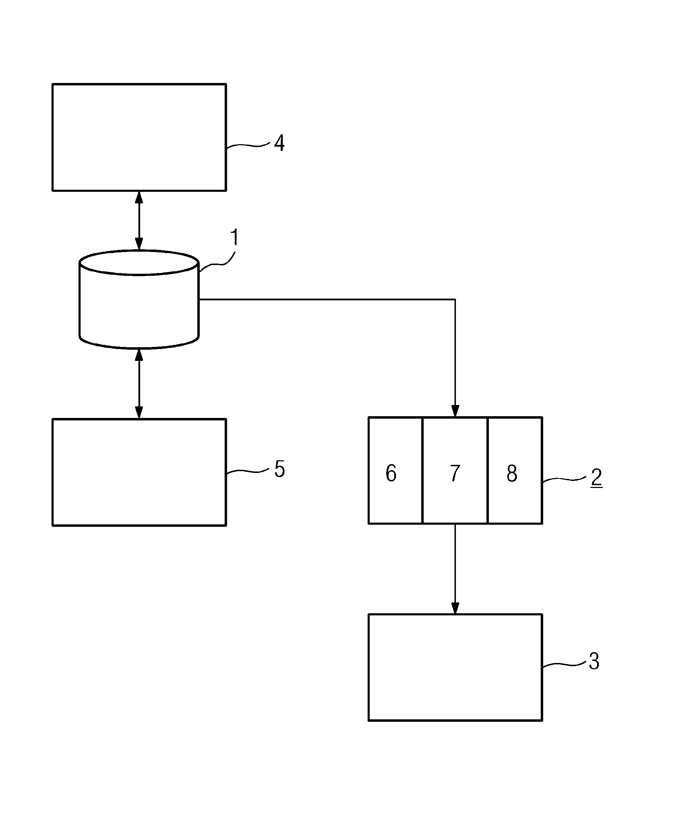

In der Figur ist eine Ereignis-Erfassungseinheit 1 erkennbar, welche mit einer Gruppen-Gebühren-Verarbeitungseinheit 2 elektrisch verbunden ist. Die Ereignis-Erfassungseinheit 1 dient der Erfassung gruppendienstspezifischer Ereignisdaten, d. h. bei dem dargestellten Ausführungsbeispiel sind die erfassten Ereignisdaten nicht nur für die jeweilige Gruppe, sondern auch für den jeweiligen Gruppendienst spezifisch. Hierdurch werden für verschiedene Arten von Gruppendiensten unterschiedliche Vergebührungsmodelle ermöglicht.

Die gruppendienstspezifischen Ereignisdaten, die vorzugsweise eine den Zeitpunkt des Eintretens des jeweiligen Ereignisses kennzeichnende Zeitangabe enthalten, können beispielsweise Informationen zu den folgenden Ereignissen bzw. Fragen enthalten:
- Welcher Teilnehmer hat die betreffende Gruppe eingerichtet?
- Welcher Teilnehmer wurde in die Gruppe aufgenommen?
- Welcher Teilnehmer hat die Gruppe verlassen?
- Welcher Teilnehmer hat welche Daten verteilt?
- Welcher Teilnehmer hat welche Nachrichten gesendet und welche Datengröße hatten die betreffenden Nachrichten?
- Welcher Teilnehmer hat welche Nachrichten empfangen und welche Datengröße hatten die betreffenden Nachrichten?

Handelt es sich bei dem Gruppendienst beispielsweise um einen so genannten Chat-Dienst, so können entsprechende Ereignisdaten etwa in Abhängigkeit von dem Einrichten eines Chat-Rooms, der Zeitdauer des Verweilens in dem Chat-Room oder auch dem Eintreten oder Verlassen des Chat-Rooms erfasst werden. Dabei kann beispielsweise die Zeitdauer des Verweilens in dem Chat-Room unabhängig davon vergebührt werden, ob tatsächlich Nachrichten versendet wurden oder nicht. Die Anzahl der Teilnehmer wird sich während der Zeitdauer, die ein Gruppendienst aktiv ist, üblicherweise dynamisch mit der Zeit ändern.

Die erfassten gruppendienstspezifischen Ereignisdaten werden von der Ereignis-Erfassungseinheit 1 an die Gruppen-Gebühren-Verarbeitungseinheit 2 übermittelt. Dabei ist nicht zwingend die Übermittlung aller gruppendienstspezifischen Ereignisdaten erforderlich, sondern es kann auch lediglich eine Übermittlung des vergebührungsrelevanten Anteils erfolgen. Hierzu kann durch die Ereignis-Erfassungseinheit 1 eine Auswahl derjenigen gruppendienstspezifischen Ereignisdaten vorgenommen werden, die für die Vergebührung relevant sind. Die entsprechende Auswahl kann nach verschiedenen Kriterien, wie beispielsweise der Art des Ereignisses, erfolgen. Alternativ kann eine entsprechende Auswahl von Ereignisdaten auch erst nach der Übermittlung durch die Gruppen-Gebühren-Verarbeitungseinheit 2 vorgenommen werden.

Die Gruppen-Gebühren-Verarbeitungseinheit 2 weist Empfangsmittel 6 zum Empfangen der gruppendienstspezifischen Ereignisdaten und Analysemittel 7 zum Auswerten der vergebührungsrelevanten gruppendienstspezifischen Ereignisdaten auf. Als Ergebnis der Auswertung erzeugen Vergebührungsdatenmittel 8 der Gruppen-Gebühren-Verarbeitungseinheit 2 nutzungsabhängige und teilnehmerspezifische Vergebührungsdaten. Diese Vergebührungsdaten werden zur teilnehmerspezifischen Nachverarbeitung von der Gruppen-Gebühren-Verarbeitungseinheit 2 an die Vergebührungseinheit 3 übermittelt.

Die Vergebührungseinheit 3 führt eine Nachverarbeitung der durch die Gruppen-Gebühren-Verarbeitungseinheit 2 aufbereiteten Vergebührungsdaten durch. Sofern es sich bei den Teilnehmern der Gruppe um Kunden unterschiedlicher Dienstanbieter oder unterschiedlicher Netzbetreiber handelt, so kann die Übertragung der Vergebührungsdaten für die jeweiligen Teilnehmer auch an mehrere, unterschiedliche Vergebührungseinheiten erfolgen. Alternativ ist es auch möglich, dass bereits die Ereignis-Erfassungseinheit 1 eine dienstanbieter- und/oder netzbetreiberabhängige Filterung der Ereignisdaten vornimmt und die entsprechenden Ereignisdaten an verschiedene Gruppen-Gebühren-Verarbeitungseinheiten 2 überträgt.

Die Ereignis-Erfassungseinheit 1 kommuniziert darüber hinaus sowohl mit einem Gruppenverwaltungs-Server 4 als auch mit einem Gruppendienst-Server 5. Dabei sind auf dem Gruppenverwaltungs-Server 4 alle für die Einrichtung und Verwaltung der Gruppe relevanten Daten gespeichert. Der Gruppendienst-Server 5 dient dem Ablauf des Gruppendienstes und verteilt die Nachrichten des Gruppendienstes über das Kommunikationsnetz. Dabei werden dem Gruppendienst-Server 5 die gruppendienstspezifischen Adressen der Teilnehmer bzw. Mitglieder der Gruppe von dem Gruppenverwaltungs-Server 4 mitgeteilt. Die Ereignis-Erfassungseinheit 1 kann in dem dargestellten Ausführungsbeispiel sowohl von dem Gruppenverwaltungs-Server 4 als auch vom Gruppendienst-Server 5 gruppendienstspezifische Ereignisdaten empfangen. Dabei können die Ereignisdaten von dem Gruppenverwaltungs-Server 4 und dem Gruppendienst-Server 5 an die Ereignis-Erfassungseinheit 1 gesendet oder von Seiten der Ereignis-Erfassungseinheit 1 von dem Gruppenverwaltungs-Server 4 und dem Gruppendienst-Server 5 abgefragt werden. Darüber hinaus besteht auch die Möglichkeit, dass die Ereignis-Erfassungseinheit 1 die Ereignisdaten durch Mitschneiden von zwischen dem Gruppenverwaltungs-Server 4 und dem Gruppendienst-Server 5 ausgetauschten Nachrichten erfasst. Alternativ zu der Darstellung in der Figur kann die Ereignis-Erfassungseinheit 1 auch als Bestandteil des Gruppenverwaltungs-Servers 4 oder des Gruppendienst-Servers 5 realisiert werden. Generell sei an dieser Stelle noch einmal darauf hingewiesen, dass es sich bei den dargestellten Komponenten um logische Einheiten handelt, welche nicht zwangsläufig in separaten Hardware-Komponenten realisiert sein müssen.

Handelt es sich bei den Teilnehmern des Gruppendienstes um Post-Paid-Teilnehmer, so werden die gruppendienstspezifischen Ereignisdaten von der Ereignis-Erfassungseinheit 1 in ein Protokoll geschrieben. Das Protokoll beinhaltet dabei vorzugsweise alle gruppendienstspezifischen Ereignisdaten oder aber zumindest alle vergebührungsrelevanten gruppendienstspezifischen Ereignisdaten. Die Ereignis-Erfassungseinheit 1 kann das Protokoll beispielsweise in Form eines so genannten Log-Files oder in einer Datenbank speichern. Dabei werden die die Gruppe bzw. die Nutzung des Gruppendienstes betreffenden dynamischen Vorgänge vorzugsweise mit einem Zeitstempel versehen, wodurch festgehalten wird, welcher Teilnehmer in welcher Form und zu welchem Zeitpunkt den jeweiligen Gruppendienst genutzt hat. Die Übermittlung der gruppendienstspezifischen bzw. der vergebührungsrelevanten gruppendienstspezifischen Ereignisdaten von der Ereignis-Erfassungseinheit 1 an die Gruppen-Gebühren-Verarbeitungseinheit 2 kann dabei beispielsweise durch das Aufbauen einer FTP-Verbindung mit anschließendem Laden des Protokolls auf die Gruppen-Gebühren-Verarbeitungseinheit 2 erfolgen.

Handelt es sich bei den Teilnehmern des Gruppendienstes um Teilnehmer mit vorausbezahlten Konten (so genannte Pre-Paid-Teilnehmer), so sendet die Ereignis-Erfassungseinheit 1 die vergebührungsrelevanten gruppendienstspezifischen Ereignisdaten unmittelbar nach ihrer Erfassung an die Gruppen-Gebühren-Verarbeitungseinheit 2. Dabei kann die Gruppen-Gebühren-Verarbeitungseinheit 2 einen Teil eines Pre-Paid-Systems darstellen, oder aber diesem als separate logische Funktionseinheit vorgeschaltet sein. Die vergebührungsrelevanten gruppendienstspezifischen Ereignisdaten werden hierbei mit möglichst geringer zeitlicher Verzögerung an das Pre-Paid-System übermittelt, damit sichergestellt wird, dass die Nutzung des Gruppendienstes immer durch ein entsprechendes vorausbezahltes Guthaben des Teilnehmers gedeckt ist. Das Versenden von die Ereignisdaten enthaltenden Nachrichten von der Ereignis-Erfassungseinheit 1 an die Gruppen-Gebühren-Verarbeitungseinheit 2 kann hierbei zeitgleich mit dem gegebenenfalls zusätzlichen Schreiben der entsprechenden Information in ein Protokoll erfolgen. Alternativ zu dem Versenden der Nachrichten durch die Ereignis-Erfassungseinheit 1 kann auch eine ständige Abfrage (Polling) der Ereignis-Erfassungseinheit 1 durch die Gruppen-Gebühren-Verarbeitungseinheit 2 oder durch eine zusätzliche zwischengeschaltete Komponente erfolgen. Entscheidend ist hierbei, dass die Vergebührungsdaten zeitnah erzeugt und an das Pre-Paid-System übermittelt werden, welches Zugriff auf die Konten der Teilnehmer hat.

Sofern in einer Gruppe nicht alle Teilnehmer über vorausbezahlte Konten verfügen, so ist auch die gleichzeitige Unterstützung von Post-Paid-Teilnehmern möglich. In diesem Fall kann die Übermittlung der vorzugsweise zusätzlich in dem Protokoll gespeicherten vergebührungsrelevanten gruppendienstspezifischen Ereignisdaten an eine entsprechend ausgebildete Gruppen-Gebühren-Verarbeitungseinheit 2 erfolgen, welche sowohl Pre-Paid- als auch Post-Paid-Teilnehmer unterstützt. Hierfür können an die Gruppen-Gebühren-Verarbeitungseinheit 2 unterschiedliche Vergebührungseinheiten 3 angeschlossen werden, z. B. jeweils eine für Pre-Paid- und eine für Post-Paid-Teilnehmer. Falls eine Vergebührungseinheit 3 beide Arten von Teilnehmern unterstützt, so sind unterschiedliche Gruppen-Gebühren-Verarbeitungseinheiten 2 für Pre-Paid- und für Post-Paid-Teilnehmer nicht erforderlich.

## Patentansprüche

1. Verfahren zum Betreiben eines Gruppendienstes in einem Kommunikationsnetz mit den folgenden Schritten:
- Erfassen gruppenspezifischer Ereignisdaten in einer Ereignis-Erfassungseinheit (1),
- Übermitteln zumindest der vergebührungsrelevanten gruppenspezifischen Ereignisdaten von der Ereignis-Erfassungseinheit (1) an eine Gruppen-Gebühren-Verarbeitungseinheit (2) und
- Auswerten der vergebührungsrelevanten gruppenspezifischen Ereignisdaten und Erzeugen von nutzungsabhängigen und teilnehmerspezifischen Vergebührungsdaten durch die Gruppen-Gebühren-Verarbeitungseinheit (2).

2. Verfahren nach Anspruch 1,
**dadurch gekennzeichnet, dass**
die gruppenspezifischen Ereignisdaten protokolliert werden und zumindest die vergebührungsrelevanten gruppenspezifischen Ereignisdaten von der Ereignis-Erfassungseinheit (1) an die Gruppen-Gebühren-Verarbeitungseinheit (2) übermittelt werden.

3. Verfahren nach Anspruch 1 oder 2,
**dadurch gekennzeichnet, dass**
zumindest die vergebührungsrelevanten gruppenspezifischen Ereignisdaten jeweils unmittelbar nach ihrer Erfassung von der Ereignis-Erfassungseinheit (1) an die Gruppen-Gebühren-Verarbeitungseinheit (2) übermittelt werden.

4. Verfahren nach einem der vorhergehenden Ansprüche,
**dadurch gekennzeichnet, dass**
die gruppenspezifischen Ereignisdaten gruppendienstspezifisch sind.

5. Verfahren nach einem der vorhergehenden Ansprüche,
**dadurch gekennzeichnet, dass**
die Vergebührungsdaten zur teilnehmerspezifischen Nachverarbeitung von der Gruppen-Gebühren-Verarbeitungseinheit (2) an zumindest eine Vergebührungseinheit (3) übermittelt werden.

6. Verfahren nach einem der vorhergehenden Ansprüche,
**dadurch gekennzeichnet, dass**
als Ereignis-Erfassungseinheit (1) ein Gruppenverwaltungs-Server (4) verwendet wird, auf dem die für die Einrichtung und Verwaltung der Gruppe des Gruppendienstes relevanten Daten gespeichert sind.

7. Verfahren nach einem der Ansprüche 1 bis 5,
**dadurch gekennzeichnet, dass**
als Ereignis-Erfassungseinheit (1) ein Gruppendienst-Server (5) verwendet wird, der den Gruppendienst mittels des Kommunikationsnetzes für die Gruppe zur Verfügung stellt.

8. Verfahren nach einem der vorhergehenden Ansprüche,
**dadurch gekennzeichnet, dass**
als Kommunikationsnetz ein Mobilfunknetz verwendet wird.

9. Verfahren nach einem der vorhergehenden Ansprüche,
**dadurch gekennzeichnet, dass**
der Gruppendienst über die Grenze des Kommunikationsnetzes hinweg betrieben wird.

10. Anordnung zum Betreiben eines Gruppendienstes in einem Kommunikationsnetz mit
- Erfassung gruppenspezifischer bzw. gruppendienstspezifischer Ereignisdaten in einer Ereignis-Erfassungseinheit (1) und
- mit einer mit der Ereignis-Erfassungseinheit (1) verbundenen Gruppen-Gebühren-Verarbeitungseinheit (2) mit
- Empfangsmitteln (6) zum Empfangen zumindest der vergebührungsrelevanten gruppenspezifischen bzw. gruppendienstspezifischen Ereignisdaten von der Ereignis-Erfassungseinheit (1),
- Analysemitteln (7) zum Auswerten der vergebührungsrelevanten gruppenspezifischen bzw. gruppendienstspezifischen Ereignisdaten und
- Vergebührungsdatenmitteln (8) zum Erzeugen von nutzungsabhängigen und teilnehmerspezifischen Vergebührungsdaten.

11. Anordnung nach Anspruch 10,
**dadurch gekennzeichnet, dass**
die Ereignis-Erfassungseinheit (1) zum Protokollieren der gruppenspezifischen bzw. gruppendienstspezifischen Ereignisdaten und zur Übermittlung zumindest der vergebührungsrelevanten gruppenspezifischen bzw. gruppendienstspezifischen Ereignisdaten an die Gruppen-Gebühren-Verarbeitungseinheit (2) ausgebildet ist.

12. Anordnung nach Anspruch 10 oder 11,
**dadurch gekennzeichnet, dass**
die Ereignis-Erfassungseinheit (1) zur Übermittlung zumindest der vergebührungsrelevanten gruppenspezifischen bzw. gruppendienstspezifischen Ereignisdaten jeweils unmittelbar nach ihrer Erfassung an die Gruppen-Gebühren-Verarbeitungseinheit (2) ausgebildet ist.

13. Anordnung nach einem der Ansprüche 10 bis 12,
**dadurch gekennzeichnet, dass**
mit der Gruppen-Gebühren-Verarbeitungseinheit (2) eine Vergebührungseinheit (3) verbunden ist zum Empfangen der Vergebührungsdaten und zu deren teilnehmerspezifischen Nachverarbeitung.

14. Anordnung nach einem der Ansprüche 10 bis 13,
**dadurch gekennzeichnet, dass**
die Ereignis-Erfassungseinheit (1) ein Gruppenverwaltungs-Server (4) ist, auf dem die für die Einrichtung und Verwaltung der Gruppe des Gruppendienstes relevanten Daten gespeichert sind.

15. Anordnung nach einem der Ansprüche 10 bis 13,
**dadurch gekennzeichnet, dass**
die Ereignis-Erfassungseinheit (1) ein Gruppendienst-Server (5) ist, der den Gruppendienst mittels des Kommunikationsnetzes für die Gruppe zur Verfügung stellt.

16. Anordnung nach einem der Ansprüche 10 bis 15,
**dadurch gekennzeichnet, dass**
das Kommunikationsnetz ein Mobilfunknetz ist.
